# FASCICULE DE BREVET EUROPEEN

(11) **EP 3 759 020 B1**
(45) Date de publication et mention de la délivrance du brevet: **09.06.2021**
(21) Numéro de dépôt: 19714087.4
(22) Date de dépôt: 02.04.2019
(51) Int. Cl.: B64D 33/00

(54) **SYSTEME ET PROCEDE DE DEMARRAGE/GENERATION POUR TURBOMACHINE D'AERONEF**
ANLASS-/ERZEUGUNGSSYSTEM UND -VERFAHREN FÜR EIN FLUGZEUGTURBINENTRIEBWERK
STARTING/GENERATING SYSTEM AND METHOD FOR AN AIRCRAFT TURBINE ENGINE

(30) Priorité: 09.04.2018 FR 1853049
(43) Date de publication de la demande: 06.01.2021
(73) Titulaire: Safran Electrical & Power, 31702 Blagnac (FR)
(72) Inventeur: LAPALUS, Philippe, 31702 BLAGNAC (FR); NIERLICH, Florent, 31702 BLAGNAC (FR)
(74) Mandataire: Argyma
(86) Numéro de dépôt international: PCT/EP2019/058305
(87) Numéro de publication internationale: WO 2019/197224

(56) Documents cités:
- EP-A2- 2 886 387
- US-A1- 2010 283 319
- US-A1- 2014 138 479

## Description

### DOMAINE TECHNIQUE GENERAL ET ART ANTERIEUR

La présente invention concerne le domaine de l'aéronautique et, plus particulièrement, un système de démarrage/génération pour turbomachine d'aéronef qui est configuré, d'une part, pour démarrer une turbomachine et d'autre part pour alimenter électriquement un réseau électrique de bord une fois que la turbomachine est démarrée.

Un système de démarrage/génération comporte de manière connue un moteur d'entraînement pour démarrer la turbomachine. Dans l'art antérieur, comme indiqué dans la demande de brevet WO2017/068274 du demandeur, un moteur d'entraînement à balais était généralement utilisé. Afin de réduire les coûts de maintenance et d'augmenter la fiabilité, il est dorénavant préféré d'utiliser un moteur/générateur d'entraînement sans balais connu de l'homme du métier sous sa désignation anglaise « brushless ».

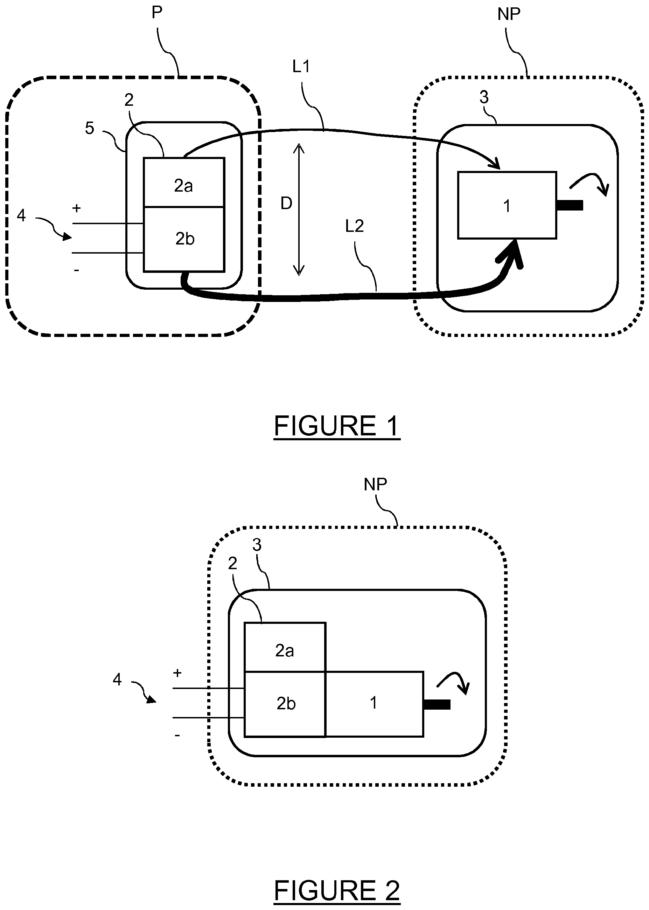

De manière connue, en référence à la figure 1, le système de démarrage/génération comporte un moteur/générateur d'entraînement sans balais 1 qui est monté à proximité de la turbomachine dans une zone non pressurisée NP, en particulier, dans un logement 3 d'une nacelle de l'aéronef. Le moteur/générateur d'entraînement sans balais 1 est relié à un dispositif de gestion 2, logé dans une zone pressurisée P d'un aéronef, en particulier dans une baie avionique 5.

Le dispositif de gestion 2 comporte, d'une part, un module de contrôle 2a relié au moteur/générateur d'entraînement sans balais 1 par un câble de contrôle L1 et, d'autre part, un module de puissance 2b relié au moteur/générateur d'entraînement sans balais 1 par un câble de puissance L2.

Le module de contrôle 2a est configuré pour fournir un signal de contrôle au moteur/générateur d'entraînement sans balais 1 via le câble de contrôle L1. Le signal de contrôle correspond par exemple à un courant continu, appelé courant d'excitation, permettant de contrôler lors du démarrage le couple ou la vitesse de rotation. Lors de la génération, le signal de contrôle permet de contrôler la tension fournie par le moteur/générateur d'entraînement sans balais 1. Le module de puissance 2b est relié au réseau électrique de bord 4 et est configuré pour fournir une énergie électrique au moteur/générateur d'entraînement sans balais 1 pour assurer le démarrage de la turbomachine. En génération, une fois la turbomachine démarrée, le module de puissance 2b reçoit de l'énergie électrique du moteur/générateur d'entraînement sans balais 1 qu'il distribue au réseau électrique de bord 4. En pratique, le réseau électrique de bord 4 possède une tension élevée, en particulier, de l'ordre de 115VAC. Le module de contrôle 2a permet par ailleurs de commander l'électronique du module de puissance 2b. Le dispositif de gestion 2 et le moteur/générateur d'entraînement sans balais 1 possèdent chacun une structure lourde et dissipent de la chaleur. Aussi, ils possèdent chacun des moyens de refroidissement dédiés (non représentés).

En référence à la figure 1, le câble de contrôle L1 et le câble de puissance L2 doivent être espacés l'un de l'autre par une distance de sécurité D, par exemple de l'ordre de 10 cm, afin d'éviter que le câble de puissance L2 ne perturbe le signal de contrôle transmis par le câble de contrôle L1, en particulier, de manière électromagnétique du fait de l'intensité du courant circulant dans le câble de puissance L2, et du principe de découpage utilisé par le module de puissance 2b générant des perturbations liées aux variations rapides des tensions découpées. Le positionnement du câble de contrôle L1 par rapport au câble de puissance L2 est une contrainte lors de l'installation du système de démarrage/génération. De plus, il est nécessaire de prévoir des organes de blindage pour limiter les perturbations électromagnétiques.

Outre cet inconvénient, le câble de puissance L2 possède une longueur de plusieurs mètres et possède ainsi une résistance électrique intrinsèque qui conduit à une perte de la puissance transmise par le câble de puissance L2. Cette résistance électrique intrinsèque est d'autant plus contraignante quand l'objectif est d'utiliser un réseau électrique de bord 4 ayant une basse tension, en particulier de l'ordre de 28V. Autrement dit, pour fournir une puissance équivalente à à un réseau électrique de bord 4 du type 115VAC, il est nécessaire de faire circuler un courant ayant une intensité élevée. Ainsi, toute résistance électrique intrinsèque du câble de puissance L2 entraîne une augmentation de la chaleur générée par effet Joule ainsi qu'une chute importante de la puissance transmise.

Afin d'éliminer cet inconvénient, une solution serait de loger le système de démarrage/génération entièrement dans le logement 3 de la turbomachine, c'est-à-dire dans une zone non pressurisée NP comme illustré à la figure 2. A cet effet, le dispositif de gestion 2 est positionné de manière adjacente au moteur/générateur d'entraînement sans balais 1. Comme le module de contrôle 2a et le module de puissance 2b sont à proximité du moteur/générateur d'entraînement sans balais 1, il n'est plus nécessaire de recourir à un câble de puissance L2 de grande longueur comme dans l'art antérieur, ce qui réduit les pertes électriques. Cette solution présente néanmoins l'inconvénient d'exposer le dispositif de gestion 2 à des conditions de pression, de température et de vibrations mécaniques qui rendent sa conception très difficile.

L'invention a donc pour but de remédier à ces inconvénients en proposant un nouveau système de démarrage/génération qui permette, d'une part, de limiter les contraintes de positionnement entre les câbles et, d'autre part, de limiter les pertes de puissance tout en permettant un fonctionnement optimal.

De manière incidente, on connaît par la demande de brevet US2014/138479 un dispositif pour alimenter un aéronef au sol, en particulier un APU. Ce document enseigne de prévoir deux dispositifs de génération d'électricité pour alimenter un réseau taxi pour la circulation au sol et un réseau d'alimentation générale de l'aéronef.

### PRESENTATION GENERALE DE L'INVENTION

A cet effet, l'invention concerne un système de démarrage/génération pour turbomachine d'aéronef, le système de démarrage/génération comportant au moins un moteur/générateur d'entraînement sans balais, au moins un module de contrôle et au moins un module de puissance, le moteur/générateur d'entraînement sans balais étant configuré pour être positionné dans un logement dans une zone non pressurisée pour démarrer une turbomachine de l'aéronef, le module de puissance étant configuré pour être relié à un réseau électrique de bord de l'aéronef, le module de puissance étant configuré pour fournir/recevoir de l'énergie électrique du moteur/générateur d'entraînement sans balais, le module de contrôle étant relié au moteur/générateur d'entraînement sans balais par un câble de contrôle afin de contrôler son fonctionnement.

L'invention est remarquable en ce que le module de puissance est configuré pour être monté dans le logement de la zone non pressurisée de manière à être situé de manière adjacente au moteur/générateur d'entraînement sans balais et en ce que le module de contrôle est configuré pour être monté dans une zone pressurisée de l'aéronef, le module de contrôle étant relié au module de puissance par un câble de communication bidirectionnelle afin de contrôler son fonctionnement.

Grâce à l'invention, un long câble de puissance n'est plus nécessaire étant donné que le module de puissance est situé de manière adjacente au moteur/générateur d'entraînement sans balais. Cela permet avantageusement d'éviter tout échauffement par effet Joule ou perte de puissance. De plus, cela permet d'éviter toute perturbation du câble de contrôle par le câble de puissance. Par ailleurs, comme le module de contrôle est déporté de la turbomachine, celui-ci n'est pas impacté par les conditions de pression et de température, ce qui garantit une conception plus aisée et un fonctionnement plus fiable. Enfin, une communication bidirectionnelle permet de réaliser un contrôle précis du module de puissance par le module de contrôle, ce qui est particulièrement avantageux avec un moteur/générateur d'entraînement sans balais lors des phases de démarrage et de génération. En outre, un câble de communication bidirectionnelle peut être placé sans contrainte importante par rapport au câble de contrôle, ce qui accélère l'installation et la maintenance d'un système de démarrage/génération.

De manière préférée, le logement est métallique de manière à former une cage de Faraday évitant l'émission de perturbations électromagnétiques à l'extérieur, notamment, susceptibles d'impacter le câble de contrôle.

De préférence, le module de contrôle et le module de puissance sont configurés pour échanger de manière numérique via le câble de communication bidirectionnelle. Une communication numérique permet un débit important pour un contrôle réactif. En outre, les contraintes de blindage de la communication numérique conduisent à une masse beaucoup plus faible que celles nécessaires au blindage d'un câblage de puissance.

De manière préférée, le module de puissance comportant au moins un onduleur/redresseur comportant des transistors, le module de contrôle comporte un dispositif de calcul configuré pour calculer des rapports cycliques de commande des transistors de l'onduleur/redresseur. Un tel dispositif de calcul permet de paramétrer le module de puissance de manière réactive, notamment lors des phases de démarrage et de génération, via le câble de communication bidirectionnelle. De manière alternative, le dispositif de calcul est configuré pour calculer une consigne de courant en mode démarrage associé à un redressement synchrone local.

Selon un aspect préféré, le module de puissance comporte au moins un dispositif de mesure d'un ou plusieurs des paramètres suivants du moteur/générateur d'entraînement sans balais : tension continue en interface avec le réseau électrique de bord, courant de phase, signal de contrôle, vitesse d'un rotor, position angulaire d'un rotor, température. De telles mesures permettent de suivre précisément les paramètres du démarrage/génération et permettent un contrôle réactif pour réaliser un démarrage/génération optimal.

De préférence, le dispositif de calcul est configuré pour calculer les rapports cycliques de commande des transistors de l'onduleur/redresseur en fonction d'un ou plusieurs paramètres mesurés par le dispositif de mesure. Ainsi, le contrôle du module de puissance permet de tenir compte de l'état du moteur/générateur d'entraînement sans balais pour le contrôler de manière adaptée.

Selon un aspect préféré, le réseau électrique de bord est du type 28VDC.

Selon une forme de réalisation, le système de démarrage comporte au moins un module de refroidissement, monté dans le logement, configuré pour refroidir le moteur/générateur d'entraînement sans balais et le module de puissance. Un tel module de refroidissement est avantageusement mutualisé entre le moteur/générateur d'entraînement sans balais et le module de puissance, ce qui permet de limiter ses dimensions et donc l'encombrement. De manière avantageuse, le module de contrôle ne dissipant pas de chaleur importante, il n'est pas nécessaire de prévoir un module de refroidissement dans la zone pressurisée.

L'invention concerne également un aéronef comportant au moins une turbomachine, au moins un système de démarrage/génération tel que présenté précédemment, au moins une zone pressurisée et au moins une zone non-pressurisée. Le module de contrôle du système de démarrage/génération est monté dans la zone pressurisée tandis que le module de puissance et le moteur/générateur d'entraînement sans balais du système de démarrage/génération sont montés dans une zone non-pressurisée.

Grâce à l'invention, le module de contrôle demeure logé dans une zone pressurisée (et tempérée), ce qui rend sa conception plus facile et le rend plus fiable. Le module de puissance et le moteur/générateur d'entraînement sans balais du système de démarrage/génération sont montés ensemble dans une zone non-pressurisée afin de limiter les pertes de puissance comme évoqué précédemment.

L'invention concerne en outre un procédé de démarrage d'une turbomachine d'un aéronef au moyen d'un système de démarrage/génération tel que présenté précédemment, procédé dans lequel :
- Le module de contrôle émet des instructions de démarrage au module de puissance via le câble de communication bidirectionnelle, afin qu'il alimente le moteur/générateur d'entraînement sans balais à partir du réseau électrique de bord et
- Le module de contrôle émet un signal de contrôle au moteur/générateur d'entraînement sans balais via le câble de contrôle afin de contrôler le couple et/ou la vitesse d'entraînement du moteur/générateur d'entraînement sans balais.

Un tel procédé de démarrage permet un démarrage de la turbomachine qui est fiable et qui limite les pertes électriques.

### PRESENTATION DES FIGURES

L'invention sera mieux comprise à la lecture de la description qui va suivre, donnée uniquement à titre d'exemple, et se référant aux dessins annexés sur lesquels :
- La figure 1 est une représentation schématique d'un système de démarrage/génération selon l'art antérieur,
- La figure 2 est une représentation schématique d'une proposition d'un nouveau système de démarrage/génération,
- La figure 3 est une représentation schématique d'un système de démarrage/génération selon l'invention et
- La figure 4 est une représentation schématique détaillée d'un système de démarrage/génération selon l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

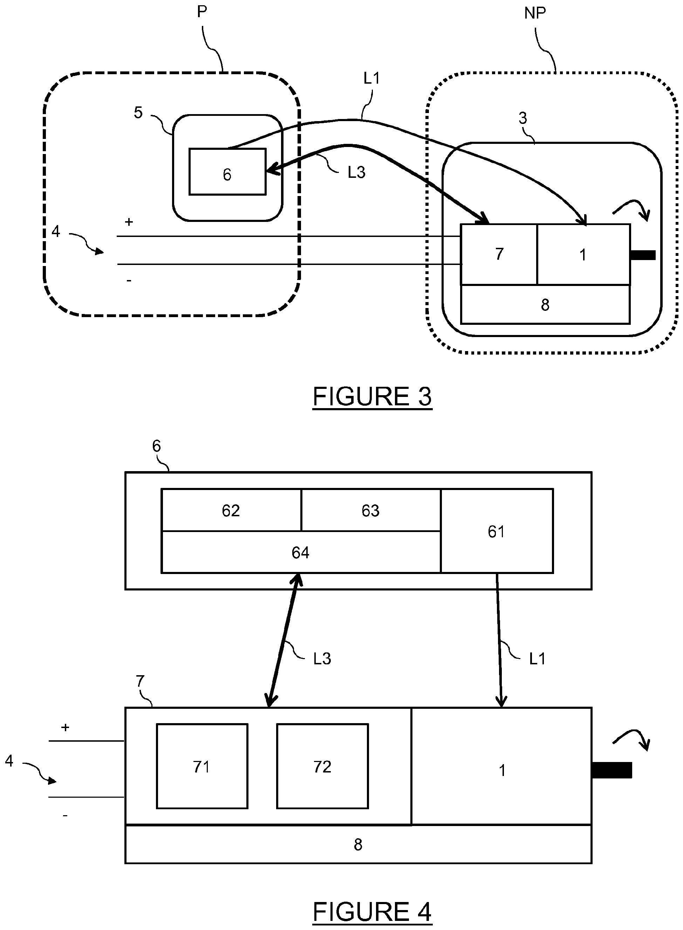

En référence à la figure 3, il est représenté un système de démarrage/génération pour turbomachine d'aéronef selon une forme de réalisation de l'invention. Le système de démarrage/génération comporte un moteur/générateur d'entraînement sans balais 1, un module de contrôle 6 et un module de puissance 7.

En référence à la figure 3, le module de puissance 7 est monté dans une zone non-pressurisée NP de l'aéronef, de manière adjacente au moteur/générateur d'entraînement sans balais 1. Le module de contrôle 6 est monté dans une zone pressurisée P de l'aéronef, à distance du module de puissance 7 monté dans une zone non pressurisée NP. Le module de contrôle 6 est relié au module de puissance 7 par un câble de communication bidirectionnelle L3 afin de contrôler son fonctionnement.

L'invention va être présentée pour une turbomachine d'avion, en particulier un turboréacteur d'avion, mais il va de soi que l'invention s'applique également à une turbomachine d'hélicoptère.

Le moteur/générateur d'entraînement sans balais 1 est configuré pour démarrer la turbomachine. Il comporte de manière connue une partie de stator (stator) et une partie de rotor (rotor) montée rotative par rapport à la partie de stator. La partie de rotor est reliée à un arbre de la turbomachine afin de permettre son entraînement lors du démarrage, la partie de rotor étant entrainée par l'arbre de la turbomachine lors de la génération de courant suite au démarrage de la turbomachine.

Le module de puissance 7 est relié à un réseau électrique de bord 4, en particulier, un réseau électrique basse tension. De manière préférée, le réseau électrique de bord 4 est du type 28VDC. Le module de puissance 7 est configuré pour fournir de l'énergie électrique au moteur/générateur d'entraînement sans balais 1 lors du démarrage à partir d'énergie électrique fournie par le réseau électrique de bord 4. Lors du démarrage, le réseau électrique de bord 4 est alimenté électriquement par une source auxiliaire. Suite au démarrage, lors de la génération, le module de puissance 7 est configuré pour fournir de l'énergie électrique au réseau électrique de bord 4 à partir d'énergie électrique fournie par le moteur/générateur d'entraînement sans balais 1. Autrement dit, suite au démarrage, le réseau électrique de bord 4 est alimenté électriquement par la turbomachine.

Comme illustré à la figure 4, le module de puissance 7 comporte des composants électroniques afin d'alimenter électriquement et recevoir de l'énergie électrique du moteur/générateur d'entraînement sans balais 1. En particulier, le module de puissance 7 comporte au moins un onduleur/redresseur 71 qui comporte, de préférence, une pluralité de transistors commandables. Dans cet exemple, le module de puissance 7 comporte au moins un dispositif de mesure 72 d'un ou plusieurs des paramètres suivants du moteur/générateur d'entraînement sans balais 1 : tension continue en interface avec le réseau électrique de bord 4, courant de phase, signal de contrôle, vitesse d'un rotor, position angulaire d'un rotor, température.

De manière préférée, le module de puissance 7 et le moteur/générateur d'entraînement sans balais 1 sont écartés de moins de 10 cm, ce qui limite toute perte de puissance liée au câblage. De préférence, le module de puissance 7 et le moteur/générateur d'entraînement sans balais 1 sont connectés directement ensemble.

En référence à la figure 3, le module de puissance 7 et le moteur/générateur d'entraînement sans balais 1 sont logés dans un même logement 3 dans une nacelle d'aéronef de manière à limiter l'encombrement. De préférence, le logement 3 est métallique de manière à former une cage de Faraday pour favoriser le confinement électromagnétique.

De manière optionnelle, le système de démarrage/génération comporte en outre un module de refroidissement 8 comme illustré aux figures 3 et 4. Le module de refroidissement 8 permet avantageusement de refroidir simultanément le module de puissance 7 et le moteur/générateur d'entraînement sans balais 1 de manière synergique. De manière avantageuse, l'encombrement du module de refroidissement 8 est sensiblement identique à l'art antérieur et est monté dans le logement 3 de la nacelle. De manière avantageuse, le module de contrôle 6 ne nécessite pas d'être refroidi, le système de démarrage/génération ne comportant qu'un unique module de refroidissement.

Le module de contrôle 6 est configuré pour émettre un signal de contrôle au moteur/générateur d'entraînement sans balais 1 afin de contrôler son fonctionnement. Dans cet exemple, en référence à la figure 3, le module de contrôle 6 est relié au moteur/générateur d'entraînement sans balais 1 par un câble de contrôle L1 analogue à l'art antérieur. De manière connue, le signal de contrôle permet de contrôler le couple et/ou la vitesse de rotation du moteur/générateur d'entraînement sans balais 1. En pratique, le module de contrôle 6 est relié à un calculateur de l'aéronef duquel il reçoit ses instructions.

Le module de contrôle 6 est également configuré pour contrôler le fonctionnement le module de puissance 7, notamment, lors du démarrage et lors de la génération. Dans l'art antérieur, le module de contrôle 6 était monté directement au module de puissance 7. Selon l'invention, le module de contrôle 6 est déporté du module de puissance 7 et relié à ce dernier par un câble de communication bidirectionnelle L3 afin de contrôler son fonctionnement. De manière préférée, le câble de communication bidirectionnelle L3 est du type BUS et permet une communication numérique entre le module de contrôle 6 et le module de puissance 7. Contrairement à un câble de puissance L2 selon l'art antérieur, un câble de communication bidirectionnelle numérique L3 n'induit quasiment pas de perturbations électromagnétiques sur le câble de contrôle L1 (ni de pertes de puissance). Aussi, les contraintes pour connecter le module de contrôle 6, situé dans une zone pressurisée P, au module de puissance 7 et au moteur/générateur d'entraînement sans balais 1, situés dans une zone non-pressurisée P, sont éliminées étant donné que le câble de communication L3 n'a pas d'impact sur le signal de contrôle transmis par le câble de contrôle L1.

Comme illustré à la figure 4, le module de contrôle 6 comporte un dispositif de génération de signal de contrôle 61 configuré pour émettre un signal de contrôle sur le câble de contrôle L1 à destination du moteur/générateur d'entraînement sans balais 1. Le module de contrôle 6 comporte un dispositif de contrôle du démarrage 62, un dispositif de contrôle de la génération 63 ainsi qu'un dispositif de calcul 64 des rapports cycliques de commande des transistors de l'onduleur/redresseur 71 du module de puissance 7. Grâce aux dispositifs 62, 63, 64, le module de contrôle 6 permet de contrôler précisément le module de puissance 7, ce qui est particulièrement important pour un moteur/générateur d'entraînement sans balais 1 en comparaison à un moteur/générateur d'entraînement avec balais selon l'art antérieur. De manière préférée, les différents dispositifs fonctionnels 61-64 du module de contrôle 6 appartiennent à une même carte électronique ou à plusieurs cartes électroniques. De manière alternative, le dispositif de calcul 64 est configuré pour calculer une consigne de courant en mode démarrage associé à un redressement synchrone local.

Grâce au câble de communication bidirectionnelle L3, le module de contrôle 6 et le module de puissance 7 peuvent échanger des données pour réaliser un démarrage ou une génération optimale. Par exemple, le module de puissance 7 peut transmettre des mesures réalisées par le dispositif de mesure 72 afin que le dispositif de calcul 64 du module de contrôle 6 calcule des rapports cycliques de commande des transistors optimaux qui sont transmis à l'onduleur/redresseur 71 du module de puissance 7.

Dans cet exemple, le système de démarrage/génération est monté dans un avion. L'avion comporte, d'une part, une zone pressurisée P, en particulier une baie avionique 5 logée dans le fuselage de l'aéronef, et d'autre part, une zone non pressurisée NP, en particulier, une nacelle de turbomachine. La nacelle d'une turbomachine est située à proximité immédiate de la turbomachine pour pouvoir la démarrer. La nacelle comporte le logement 3 dans lequel sont montés le moteur/générateur d'entraînement sans balais 1, le module de puissance 7 et le module de refroidissement 8. Le module de contrôle 6 est logé dans la baie avionique 5. Dans cet exemple, la zone pressurisée P est une baie avionique 5 et la zone non pressurisée NP est une nacelle mais il va de soi que les zones pourraient être différentes.

Un exemple de mise en oeuvre d'un procédé de démarrage va dorénavant être présenté. Tout d'abord, le module de contrôle 6 émet des instructions de démarrage à l'onduleur/redresseur du module de puissance 7 via le câble de communication bidirectionnelle L3 afin qu'il alimente le moteur/générateur d'entraînement sans balais 1 à partir du réseau électrique de bord 4. Le module de contrôle 6 émet également un signal de contrôle, généré par le dispositif de génération 61, au moteur/générateur d'entraînement sans balais 1 via le câble de contrôle L1 afin de contrôler le couple et/ou la vitesse d'entraînement d'un arbre de la turbomachine afin de la démarrer.

De préférence, le module de puissance 7 réalise des mesures de paramètres du module de puissance 7 et/ou du moteur/générateur d'entraînement sans balais 1 et transmet le ou les paramètres mesurés au module de contrôle 6 pour que ce dernier adapte les instructions de contrôle envoyées à l'onduleur/redresseur. De manière préférée, le dispositif de calcul 64 du module de commande 6 calcule les rapports cycliques de commande des transistors optimisés de l'onduleur/redresseur 71 à partir des paramètres obtenus par le dispositif de mesure 72.

## Revendications

1. Système de démarrage/génération pour turbomachine d'aéronef, le système de démarrage/génération comportant au moins un moteur/générateur d'entraînement sans balais (1), au moins un module de contrôle (6) et au moins un module de puissance (7), le moteur/générateur d'entraînement sans balais (1) étant configuré pour être positionné dans un logement (3) dans une zone non pressurisée (NP) pour démarrer une turbomachine de l'aéronef, le module de puissance (7) étant configuré pour être relié à un réseau électrique de bord (4) de l'aéronef, le module de puissance (7) étant configuré pour fournir/recevoir de l'énergie électrique du moteur/générateur d'entraînement sans balais (1), le module de contrôle (6) étant relié au moteur/générateur d'entraînement sans balais (1) par un câble de contrôle (L1) afin de contrôler son fonctionnement, **système caractérisé par le fait que** :
- Le module de puissance (7) est configuré pour être monté dans le logement (3) de la zone non pressurisée (NP) de manière à être situé de manière adjacente au moteur/générateur d'entraînement sans balais (1) et
- Le module de contrôle (6) est configuré pour être monté dans une zone pressurisée (P) de l'aéronef, le module de contrôle (6) étant relié au module de puissance (7) par un câble de communication bidirectionnelle (L3) afin de contrôler son fonctionnement.

2. Système selon la revendication 1, dans lequel le module de contrôle (6) et le module de puissance (7) sont configurés pour échanger de manière numérique via le câble de communication bidirectionnelle (L3).

3. Système selon l'une des revendications 1 à 2, dans lequel, le module de puissance (7) comportant au moins un onduleur/redresseur (71) comportant des transistors, le module de contrôle (6) comporte un dispositif de calcul (64) configuré pour calculer des rapports cycliques de commande des transistors de l'onduleur/redresseur (71).

4. Système selon l'une des revendications 1 à 3, dans lequel, le module de puissance (7) comporte au moins un dispositif de mesure (72) d'un ou plusieurs des paramètres suivants du moteur/générateur d'entraînement sans balais (1) : tension continue en interface avec le réseau électrique de bord (4), courant de phase, signal de contrôle, vitesse d'un rotor, position angulaire d'un rotor, température.

5. Système selon les revendications 3 et 4, dans lequel le dispositif de calcul (64) est configuré pour calculer les rapports cycliques de commande des transistors de l'onduleur/redresseur (71) en fonction d'un ou plusieurs paramètres mesurés par le dispositif de mesure (72).

6. Système selon l'une des revendications 1 à 5, dans lequel le réseau électrique de bord (4) est du type 28VDC.

7. Système selon l'une des revendications 1 à 6, dans lequel le système de démarrage comporte au moins un module de refroidissement (8), monté dans le logement (3), configuré pour refroidir le moteur/générateur d'entraînement sans balais (1) et le module de puissance (7).

8. Aéronef comportant au moins une turbomachine, au moins un système de démarrage/génération selon l'une des revendications 1 à 7, au moins une zone pressurisée (P) et au moins une zone non-pressurisée (NP), le module de contrôle (6) du système de démarrage/génération étant monté dans la zone pressurisée (P) tandis que le module de puissance (7) et le moteur/générateur d'entraînement sans balais (1) du système de démarrage/génération sont montés dans une zone non-pressurisée (NP).

9. Procédé de démarrage d'une turbomachine d'un aéronef au moyen d'un système de démarrage/génération selon l'une des revendications 1 à 7, procédé dans lequel :
- Le module de contrôle (6) émet des instructions de démarrage au module de puissance (7) via le câble de communication bidirectionnelle (L3) afin qu'il alimente le moteur/générateur d'entraînement sans balais (1) à partir du réseau électrique de bord (4) et
- Le module de contrôle (6) émet un signal de contrôle au moteur/générateur d'entraînement sans balais (1) via le câble de contrôle (L1) afin de contrôler le couple et/ou la vitesse d'entraînement du moteur/générateur d'entraînement sans balais (1).

## Patentansprüche

1. Starter/Generatorsystem für Flugzeug-Turbinentriebwerk, wobei das Starter/Generatorsystem mindestens einen bürstenlosen Antriebsmotor/- generator (1), mindestens ein Steuermodul (6) und mindestens ein Leistungsmodul (7) aufweist, wobei der bürstenlose Antriebsmotor/-generator (1) ausgelegt ist, um in einem Gehäuse (3) in einem nicht unter Druck stehenden Bereich (NP) positioniert zu sein, um ein Turbinentriebwerk des Flugzeugs zu starten, wobei das Leistungsmodul (7) ausgelegt ist, um mit einem elektrischen Bordnetz (4) des Flugzeugs verbunden zu sein, wobei das Leistungsmodul (7) ausgelegt ist, um dem bürstenlosen Antriebsmotor/- generator (1) elektrische Energie bereitzustellen/von ihm zu erhalten, wobei das Steuermodul (6) mit dem bürstenlosen Antriebsmotor/-generator (1) durch ein Steuerkabel (L1) verbunden ist, um seinen Betrieb zu steuern, wobei das System **dadurch gekennzeichnet ist, dass**:
- das Leistungsmodul (7) ausgelegt ist, um in dem Gehäuse (3) des nicht unter Druck stehenden Bereichs (NP) benachbart zum bürstenlosen Antriebsmotor/-generator (1) angebracht zu sein, und
- das Steuermodul (6) ausgelegt ist, um in einem unter Druck stehenden Bereich (P) des Flugzeugs angebracht zu sein, wobei das Steuermodul (6) durch ein bidirektionales Kommunikationskabel (L3) mit dem Leistungsmodul (7) verbunden ist, um seinen Betrieb zu steuern.

2. System nach Anspruch 1, wobei das Steuermodul (6) und das Leistungsmodul (7) ausgelegt sind, um sich digital über das bidirektionale Kommunikationskabel (L3) auszutauschen.

3. System nach einem der Ansprüche 1 bis 2, wobei, wobei das Leistungsmodul (7) mindestens einen Transistor aufweisenden Wechselrichter/Gleichrichter (71) aufweist, das Steuermodul (6) eine Rechenvorrichtung (64) aufweist, die ausgelegt ist, um zyklische Tastverhältnisse der Transistoren des Wechselrichters/Gleichrichters (71) zu berechnen.

4. System nach einem der Ansprüche 1 bis 3, wobei das Leistungsmodul (7) mindestens eine Messvorrichtung (72) von einem oder mehreren der folgenden Parameter des bürstenlosen Antriebsmotors/- generators (1) aufweist: Gleichspannung an der Schnittstelle mit dem elektrischen Bordnetz (4), Phasenstrom, Steuersignal, Rotorgeschwindigkeit, Winkelposition eines Rotors, Temperatur.

5. System nach den Ansprüchen 3 und 4, wobei die Rechenvorrichtung (64) ausgelegt ist, um die zyklischen Tastverhältnisse der Transistoren des Wechselrichters/Gleichrichters (71) in Abhängigkeit von einem oder mehreren von der Messvorrichtung (72) gemessenen Parametern zu berechnen.

6. System nach einem der Ansprüche 1 bis 5, wobei das elektrische Bordnetz (4) vom Typ 28VDC ist.

7. System nach einem der Ansprüche 1 bis 6, wobei das Startersystem mindestens ein in dem Gehäuse (3) angebrachtes Kühlmodul (8) aufweist, das ausgelegt ist, um den bürstenlosen Antriebsmotor/-generator (1) und das Leistungsmodul (7) zu kühlen.

8. Flugzeug, aufweisend mindestens ein Turbinentriebwerk, mindestens ein Starter/Generatorsystem nach einem der Ansprüche 1 bis 7, mindestens einen unter Druck stehenden Bereich (P) und mindestens einen nicht unter Druck stehenden Bereich (NP), wobei das Steuermodul (6) des Starter/Generatorsystems in dem unter Druck stehenden Bereich (P) angebracht ist, wohingegen das Leistungsmodul (7) und der bürstenlose Antriebsmotor/-generator (1) des Starter/Generatorsystems in einem nicht unter Druck stehenden Bereich (NP) angebracht sind.

9. Verfahren zum Start eines Turbinentriebwerks eines Flugzeugs mittels eines Starter/Generatorsystems nach einem der Ansprüche 1 bis 7, wobei bei dem Verfahren:
- das Steuermodul (6) über das bidirektionale Kommunikationskabel (L3) Startbefehle an das Leistungsmodul (7) sendet, damit es den bürstenlosen Antriebsmotor/-generator (1) ab dem elektrischen Bordnetz (4) versorgt, und
- das Steuermodul (6) über das Steuerkabel (L1) an den bürstenlosen Antriebsmotor/-generator (1) ein Steuersignal sendet, um das Drehmoment und/oder die Geschwindigkeit des Antriebs des bürstenlosen Antriebsmotors/-generators (1) zu steuern.

## Claims

1. A starter/generator system for an aircraft turbomachine, the starter/generator system comprising at least one brushless drive motor/generator (1), at least one control module (6) and at least one power module (7), the brushless drive motor/generator (1) being configured to be positioned in a housing (3) in a non-pressurised zone (NP) to start a turbomachine of the aircraft, the power module (7) being configured to be connected to an electrical wiring system (4) of the aircraft, the power module (7) being configured to provide/receive electric energy from the brushless drive motor/generator (1), the control module (6) being connected to the brushless drive motor/generator (1) through a control cable (L1) in order to control its operation, the system being **characterised in that**:
- the power module (7) is configured to be mounted into the housing (3) of the non-pressurised zone (NP) so as to be located adjacently to the brushless drive motor/generator (1) and
- the control module (6) is configured to be mounted into a pressurised zone (P) of the aircraft, the control module (6) being connected to the power module (7) by a bidirectional communication cable (L3) in order to control its operation.

2. The system according to claim 1, wherein the control module (6) and power module (7) are configured to digitally exchange via the bidirectional communication cable (L3).

3. The system according to one of claims 1-2, wherein, the power module (7) comprising at least one inverter/rectifier (71) comprising transistors, the control module (6) comprises a calculation device (64) configured to calculate duty ratios for controlling transistors of the inverter/rectifier (71).

4. The system according to one of claims 1-3, wherein, the power module (7) comprises at least one device (72) for measuring one or more of the following parameters of the brushless drive motor/generator (1): direct voltage interfacing with the aircraft electrical wiring system (4), line current, control signal, speed of a rotor, angular position of a rotor, temperature.

5. The system according to claims 3 and 4, wherein the calculation device (64) is configured to calculate duty ratios for controlling transistors of the inverter/rectifier (71) as a function of one or more parameters measured by the measuring device (72).

6. The system according to one of claims 1-5, wherein the aircraft electrical wiring system (4) is of the 28VDC type.

7. The system according to one of claims 1-6, wherein the starter system comprises at least one cooling module (8), mounted into the housing (3), configured to cool the brushless drive motor/generator (1) and power module (7).

8. An aircraft comprising at least one turbomachine, at least one starter/generator system according to one of claims 1-7, at least one pressurised zone (P) and at least one non-pressurised zone (NP), the control module (6) of the starter/generator system being mounted into the pressurised zone (P) whereas the power module (7) and brushless drive motor/generator (1) of the starter/generator system are mounted into a non-pressurised zone (NP).

9. A method for starting a turbomachine of an aircraft by means of a starter/generator system according to one of claims 1-7, method wherein:
- the control module (6) transmits starting instructions to the power module (7) via the bidirectional communication cable (L3) so that it supplies the brushless drive motor/generator (1) from the aircraft electrical wiring system (4) and
- the control module (6) transmits a control signal to the brushless drive motor/generator (1) via the control cable (L1) in order to control torque and/or drive speed of the brushless drive motor/generator (1).
